# EUROPEAN PATENT SPECIFICATION

(11) **EP 0 580 205 B1**
(45) Date of publication and mention of the grant of the patent: **15.04.1998**
(21) Application number: 93201930.0
(22) Date of filing: 01.07.1993
(51) Int. Cl.: A01D 46/24, B60P 1/64

(54) **Vehicle and a trailer for same**
Fahrzeug und Anhänger dafür
Véhicule et remorque pour un tel véhicule

(30) Priority: 20.07.1992 NL 9201298
(43) Date of publication of application: 26.01.1994
(73) Proprietor: Van den Munckhof, Mathijs René Marie Jozef, NL-5961 BH Horst (NL); Van den Munckhof, Peter Jozef Marie, NL-5961 AK Horst (NL)
(72) Inventor: Van den Munckhof, Mathijs René Marie Jozef, NL-5961 BH Horst (NL); Van den Munckhof, Peter Jozef Marie, NL-5961 AK Horst (NL)
(74) Representative: Prins, Hendrik Willem

(56) References cited:
- EP-A- 0 275 602
- WO-A-89/04265
- FR-A- 1 024 298
- NL-A- 7 802 319

## Description

The present invention relates to a vehicle for rotatably receiving a container which extends over a pair of vehicle wheels, which container can be tilted from the vehicle. A vehicle according to the preamble of Claim 1 is known from NL-A-7802319. The invention relates more particularly to a vehicle for receiving harvested fruit, wherein the vehicle which travels between the crops may only have a limited width but must nevertheless be able to rotatably receive the largest possible container for receiving harvested fruit. After filling of the container with harvested fruit this container must be easy to remove from the harvester vehicle on the path between the crops.

In addition, the vehicle must not have too great a vehicle length since the vehicle is otherwise insufficiently manoeuvrable in and between adjacent paths between crops.

The invention has for its object to provide a vehicle complying optimally with these requirements in that the vehicle width is substantially limited to the largest dimension of the container for receiving and the vehicle length can remain limited to half the largest dimension of the container plus the length of the means wherewith harvested fruit is carried up and delivered into the container.

This is achieved with a vehicle according to the invention which comprises a vehicle frame provided with front and rear wheels; a turntable for rotatably receiving a container extending over a pair of said wheels; and a tilting frame which rotatably supports the turntable and which is connected via tilting means to the vehicle frame and is tiltable between a first position in which the container rests rotatably on the turntable and a second tilted position in which the container is angled downwards towards the ground, the supporting surface of the turntable being located outside of an envelope defined by the pair of wheels when both in and moving between said first and second positions.

Because the container extends over the pair of wheels and is nevertheless received rotatably on the turntable, the vehicle width can therefore remain limited. Because in addition the container provided with harvested fruit can be tilted off the vehicle using the tilting frame, the vehicle length is also limited and means with which the container can be displaced onto and off the vehicle do not extend on either side of the turnable container.

According to a preferred embodiment the tilting frame is located between the pair of wheels and the tilting means comprise outer and inner tilting arms located on either side of the tilting frame, which arms are mounted rotatably on the vehicle frame and on the tilting frame and which are positioned such that during tilting of the tilting frame the container extending over the pair of wheels passes over and along these wheels. This specific positioning of the inner and outer tilting arms such that when tilted the container passes just over and along the wheels further realizes that the vehicle has a minimum vehicle height, which remains low due to the centre of gravity of a full container, which is highly beneficial to the stability of the vehicle.

If in further preference in the first position of the tilting frame the points of rotation of the outer tilting arms lie in or out of and away from a perpendicular plane through a wheel shaft of the pair of wheels, substantially no additional energy is required for tilting the tilting frame to the tilted position because the tilting force is provided by the filled container.

In order to bring about a stable progression of the tilting movement with a filled container it is further recommended that both outer tilting arms form a tilting yoke. This prevents the tilting frame going out of square.

If more preferably a resetting cylinder is connected on one side to the tilting frame and on the other side to the vehicle frame, and is connected via a connecting line to an accumulator filled with liquid and gas, the energy released during tilting of the tilting frame can be temporarily stored in the accumulator and re-placing of the tilting frame, possibly after picking up a container, can be performed with the stored energy. Separate means for generating energy for resetting the tilting frame can therefore be omitted. If in further preference a throttle in the connecting line comprises a piston bore, the tilting movement and the resetting movement can proceed in adjustable and gradual manner. In order to avoid undesired tilting of the tilting frame, it is further recommended that a lock for locking the tilting frame on the vehicle frame is connected to a valve which is arranged in the connecting line between the resetting cylinder and the accumulator.

Because the placing of the tilting frame does not usually allow much space being available for the means for driving for instance the turntable, but a tilting of the tilting frame may be impeded as little as possible, it is further recommended that the drive means of the turntable are connected via a divisible drive gear to the drive means of the vehicle.

If the vehicle is provided with a single steering wheel and the vehicle must be steerable in simple manner using this steering wheel, it is further recommended that the vehicle is provided with a single steerable wheel that is mounted on the vehicle frame via a shaft and is connected via a steering drive gear to a steering device rotatable round the shaft. With the steering device steering can take place easily from the front and both sides of the vehicle if in further preference the steering drive gear comprises a tooth wheel which is controllable with a handle and which is coupled to a tooth wheel of the steerable wheel.

When the vehicle according to the invention unloads a filled container on the rear side of the vehicle, it can be avoided that the filled container temporarily blocks the path between the crops for supply of an empty container when more preferably a trailer is provided with a bridge with which a container placed on the trailer can be placed onto the turntable. The length of such a trailer can be limited by placing the empty containers thereon on their side, because the height of the container is smaller than the width or the length of the container. In that case it is recommended that the bridge is a swivel bridge with which a container placed on a side can be swivelled with its container bottom onto the turntable.

Mentioned and other features of the vehicle and a trailer according to the invention will be further elucidated hereinbelow in the light of an embodiment given only by way of example, while reference is made to the annexed drawing.

In the drawing:

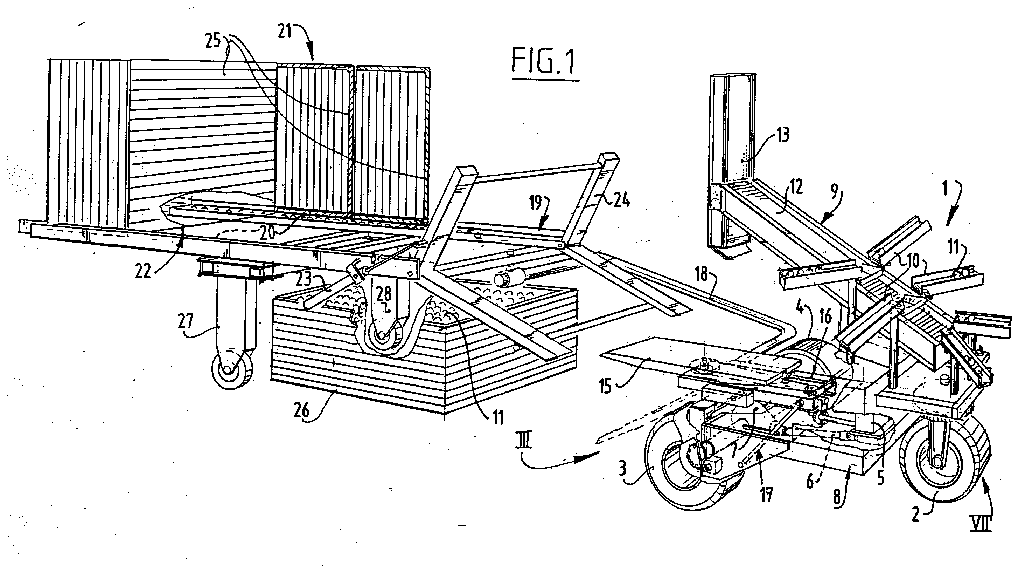

figure 1 shows a perspective view of a vehicle with trailer according to the invention;
figure 2 shows on a larger scale detail II in figure 1;
figure 3 is a view along arrow III in figure 1 with the tilting frame in the tilted position;
figures 4 and 5 show schematic side views of the vehicle with the tilting frame respectively in the first and second tilted position;
figure 6 shows on a larger scale a section through the tilting frame in its first position; and

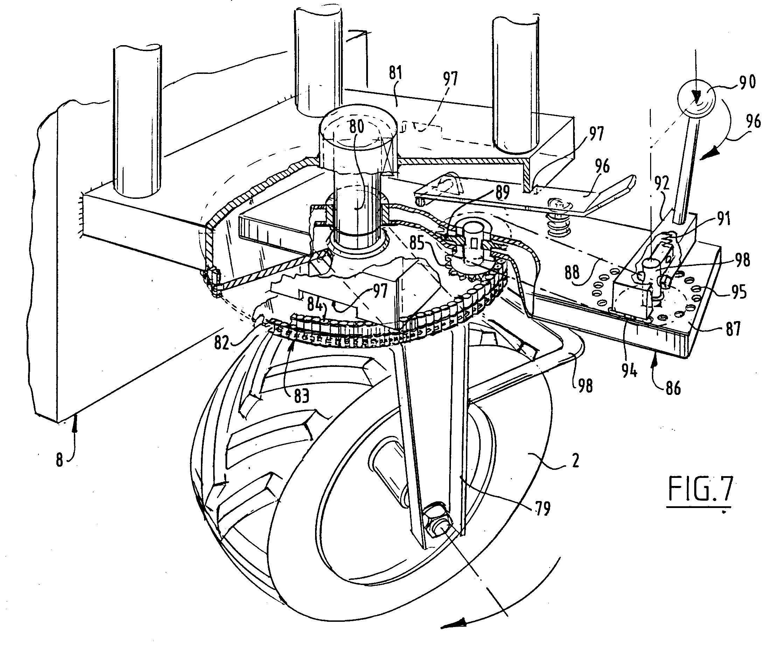

figure 7 shows on a larger scale a partly broken away perspective view of detail VII of figure 1.

The vehicle 1 according to the invention comprises a front steering wheel 2 and a pair of rear wheels 3 and 4. Wheels 3 and 4 are drivable via a motor 5, a drive shaft 6 and a differential 7.

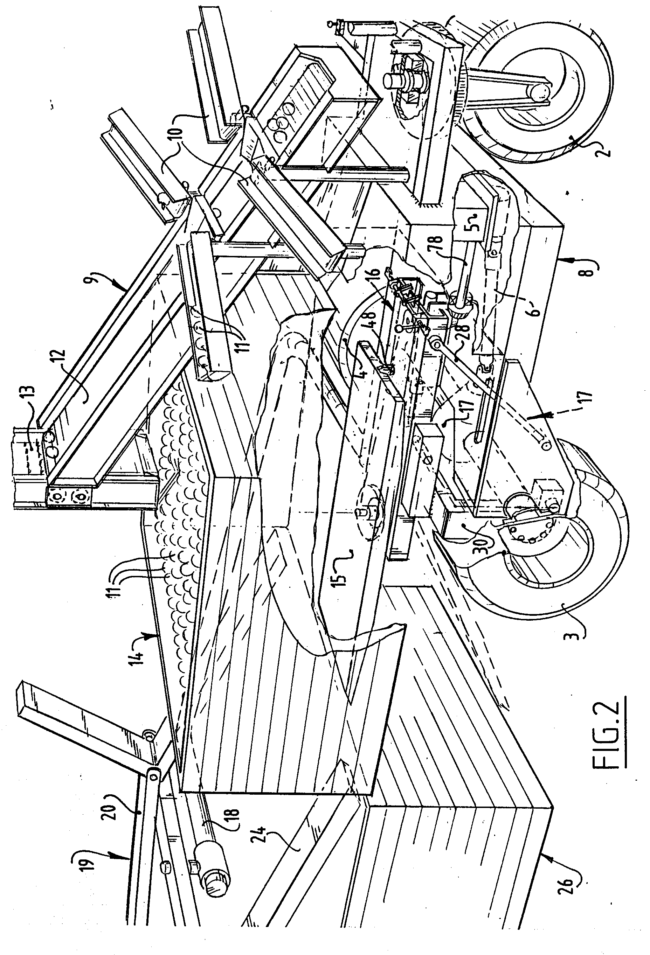

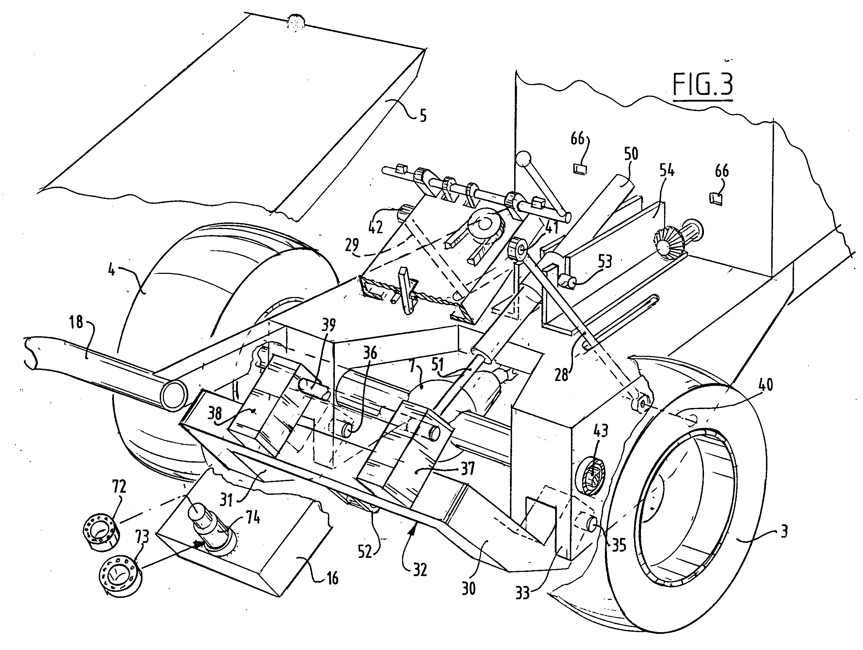

The vehicle further comprises a vehicle frame 8 on which the picking means are mounted. These picking means comprise feed conveyors 10 for harvested fruit 11 such as apples, and further a booster conveyor 12 and an unloading conveyor 13 which unloads the fruit 11 into a container 14. The latter can be placed on a turntable 15 which is supported for rotation by a tilting frame 16 which is connected for tilting via tilting means 17 to the vehicle frame 8. Via a tow bracket 18 a trailer 19 is connected to vehicle 1. Trailer 19 comprises a roller conveyor 20 on which a number of empty containers 21 are placed on a side 22. Via a swivel bridge 24 which can be actuated with a cylinder 23 an empty container 21 can be placed with its bottom 25 on turntable 15. Prior thereto turntable 15 is cleared of a container 26 filled with harvested fruit which can pass through beneath the trailer 19 via a space located between the elevated legs 27, 28 of trailer 19. Figures 2-5 show in more detail the construction and operation of vehicle 1 according to the invention.

The tilting means 17 for tilting the tilting frame 16 comprise inner tilting arms 28 and 29 located on either side of tilting frame 16, and outer tilting arms 30 and 31 which are combined into a tilting yoke 32. This latter is mounted on one side into the frame cheeks 33 and 34 via the shafts 35 and 36 and on the other side on the tilting frame 16 via the blocks 37 and 38 via a common shaft 39.

The inner tilting arms 28 and 29 are mounted on one side to the shaft 40 of the frame cheeks 33 and 34 and on the other side into the shafts 41 and 42 of tilting frame 16.

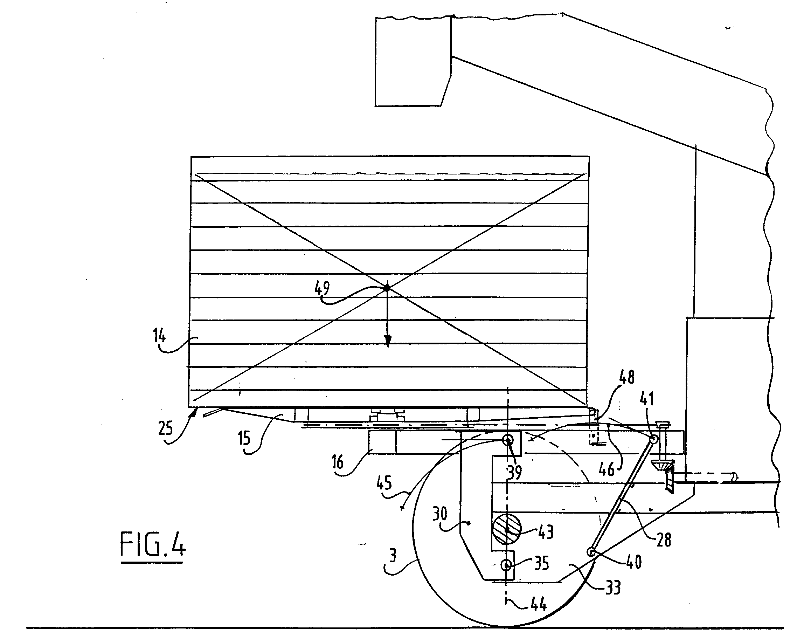

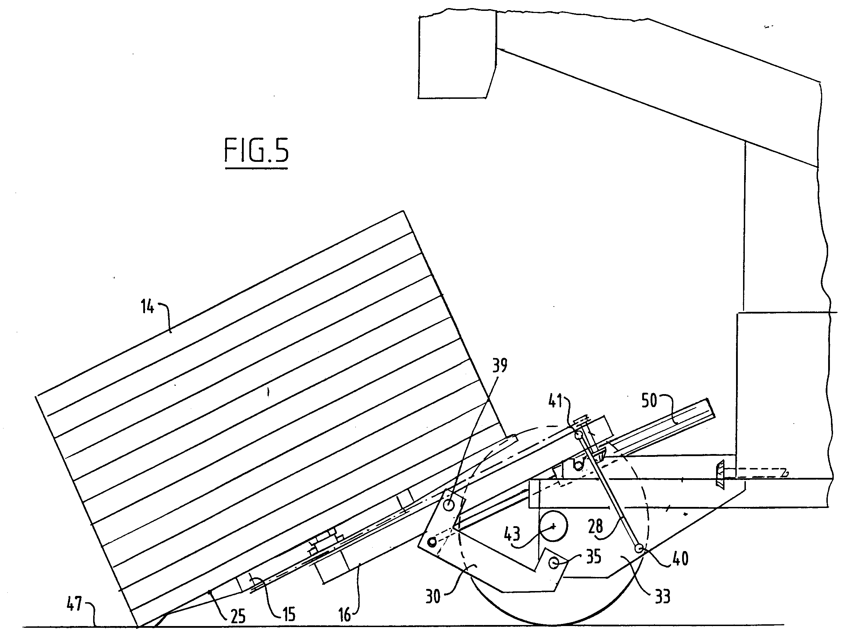

The position of the shafts 35 and 39 of an outer tilting arm 30 and the relative positions of shafts 40 and 41 of the inner tilting arm 28 are shown clearly in figures 4 and 5, both in relation to a wheel shaft 43.

The shafts or rotation points 35 and 39 in this case lie in a perpendicular plane 44 passing through the wheel shaft 43.

During tilting of the tilting frame 16 to the tilted position shown in figure 5, the shafts 39 and 41 are displaced along arcs 45 and 46 such that when the tilting frame rests on a ground 47 the bottom of container 14, which protrudes laterally of the turntable 15 to a position above both rear wheels 3 and 4, passes above and along the wheels 3 and 4. During this tilting movement the elongate turntable 15 is locked in the position shown in figure 2 by means of a lock 48.

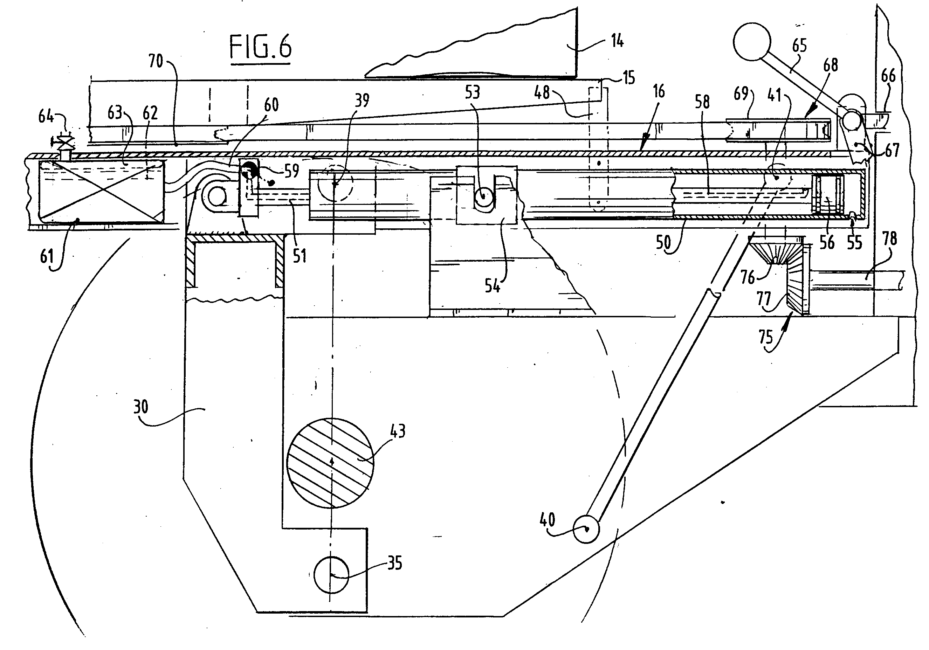

The centre of gravity 49 of container 14 lies behind the wheel shaft 43 such that during tilting the vehicle itself does not tilt. Because the centre of gravity 49 lies behind the shafts 35 and 39, the tilting movement will be set into action of its own accord after release of lock 48. The speed of the tilting movement is controlled using a resetting cylinder 50, the piston rod 51 of which is mounted in a bracket 52 which is fixed to the tilting yoke 32. The cylinder is tiltably mounted with shaft end parts 53 in a trestle frame 54. Cylinder 50 is provided with an air inlet 55 (figure 6) and a piston 56 which is connected to piston rod 51 and separates a cylinder chamber 57 filled with oil. The cylinder chamber communicates via a narrow piston rod bore 58, a valve 59 and a connecting hose 60 with an accumulator 61 filled with the oil 62 and air 63. Via a valve 64 air 63 can be admitted into and released from the accumulator.

After release of tilting frame 16 by means of the lock 65 which engages in openings 66 in the vehicle frame 8, wherein valve 59 is simultaneously opened via the rod 67, the tilting frame 16 can tilt into the tilted position shown in figure 5, while the movement is slowed down by the decelerated oil transport particularly through the piston rod bore 58 to accumulator 61. A pressure build-up thereby takes place in the accumulator from about 5-6 atmosphere to eventually about 20 atmosphere. After the container 14 has been unloaded this pressure is sufficient to reset the tilting frame 16 to the position shown in figure 4.

The tilting frame 16 comprises drive means 68 in the form of two rollers 69 and 70 having a belt 71 trained therearound, whereby the turntable mounted with two bearings 72, 73 on shaft end part 74 is drivable via the motor 5. For this purpose the roller 69 is connected to the motor shaft 78 via a divisible drive gear 75 in the form of bevel gears 76 and 77.

Vehicle 1 is provided with a single steering wheel 2 which is received in a yoke 79 and mounted via a shaft end part 80 into a plate 81 of the vehicle frame 8. Fixedly connected to the yoke 69 is a gear rim 82 around which are trained two chains 83 and 84. Co-acting with chain 84 is a pinion 85 which is mounted in a steering device 86 which is rotatable round shaft end part 80. The box-like steering device 86 further comprises a tooth wheel 87 which is mounted therein and provided with a chain 88 which is also trained round a tooth wheel 89 connected to the pinion 85. The steering device further comprises a steering handle 90 with which a lever 92 can be operated which is tiltable round a pin 98, with which a peg 94 can be lifted out of a ring of holes 95. Lever 92 is urged by means of a spring 91 to a position in which the peg 94 is pressed to the ring of holes 95. After lifting of the peg 94 using handle 90 a rotation can be performed as according to arrow 96, whereby the pinion can be operated and the steering wheel 2 can be turned relatively of the vehicle frame 8. A rotation of the box-like steering device 86 is herein avoided because a click 96 engages in an opening 97. If vehicle 1 is pulled forward on a tow bracket 98, the steering device 86 is then rendered inoperative by locking the position into which the peg 94 is lifted by placing a pin in a pin hole 98.

## Claims

1. Vehicle (1), comprising a vehicle frame (8) provided with front (2) and rear (3,4) wheels; a turntable (15) for rotatably receiving a container (14) extending over a pair of said of wheels (3,4); and a tilting frame (16) which rotatably supports the turntable (15) and which is connected via tilting means (17) to the vehicle frame (8) and is tiltable between a first position in which the container (14) rests rotatably on the turntable (15) and a second tilted position in which the container is angled downwards towards the ground, **characterized in** that the supporting surface of the turntable (15) is located outside an envelope defined by the pair of wheels (3,4) when both in and moving between said first and second positions.

2. Vehicle (1) as claimed in claim 1, wherein the tilting frame (16) is located between the pair of wheels (3,4) and the tilting means (17) comprise outer and inner tilting arms (28,31) located on either side of the tilting frame (16), which arms (28,31) are mounted rotatably on the vehicle frame (8) and on the tilting frame (16) and are positioned such that during tilting of the tilting frame (16) the container (14) extending over the pair of wheels (3,4) passes over and along these wheels.

3. Vehicle as claimed in claim 2, wherein in the first position of the tilting frame (16) the points of rotation of the outer tilting arms (30,31) lie in or out of and away from a perpendicular plane through a wheel shaft of the pair of wheels (3,4).

4. Vehicle (1) as claimed in claim 3, wherein both outer tilting arms (30,31) form a tilting yoke (32).

5. Vehicle (1) as claimed in claim 3 or 4, wherein a resetting cylinder (50) is connected on one side to the tilting frame (16) and on the other side to the vehicle frame (8), and is connected via a connecting line (60) to an accumulator (61) filled with liquid and gas.

6. Vehicle (1) as claimed in claim 5, wherein a throttle (59) in the connecting line (60) comprises a piston bore (58).

7. Vehicle as claimed in claim 5 or 6, wherein a lock (65) for locking the tilting frame (16) on the vehicle frame (8) is connected to a valve (59) which is arranged in the connecting line (60) between the resetting cylinder (50) and the accumulator (61).

8. Vehicle (1) as claimed in claims 1-7, wherein the drive means (5) of the turntable (15) are connected via a divisible drive gear (75) to the drive means of the vehicle.

9. Vehicle (1) as claimed in claims 1-8, wherein the vehicle is provided with a single steerable wheel (2) that is mounted via a shaft (80) on the vehicle frame (8) and is connected via a steering drive gear (85) to a steering device (86) rotatable round the shaft.

10. Vehicle (1) as claimed in claim 9, wherein the steering drive gear comprises a tooth wheel (87) which is controllable with a handle and which is coupled to a tooth wheel of the steerable wheel (89).

11. Vehicle (1) as claimed in claims 1-10, which is provided with a trailer (19) which is provided with a bridge (24) with which a container (21) placed on the trailer (19) can be placed onto the turntable (15).

12. Vehicle (1) as claimed in claim 11, wherein the bridge is a swivel bridge (24) with which a container (21) placed on a side can be swivelled with its container bottom onto the turntable (15).

## Patentansprüche

1. Fahrzeug (1), mit einem Fahrzeugrahmen (8), der mit vorderen (2) und hinteren (3, 4) Rädern versehen ist; einem Drehtisch (15) zum drehbaren Aufnehmen eines Behälters (14), der sich über einem Paar der Räder (3, 4) erstreckt; und einem Kipprahmen (16), welcher den Drehtisch (15) drehbar abstützt und welcher über eine Kippeinrichtung (17) mit dem Fahrzeugrahmen (8) verbunden ist und zwischen einer ersten Stellung, in welcher sich der Behälter (14) auf dem Drehtisch (15) drehbar abstützt, und einer zweiten gekippten Stellung, in welcher der Behälter nach unten zum Boden hin einen Winkel bildet, **dadurch gekennzeichnet**, daß die Abstützfläche des Drehtisches (15) sowohl in der ersten und der zweiten Stellung als auch beim Bewegen zwischen diesen außerhalb einer Umgrenzungslinie liegt, die von dem Paar Räder (3, 4) definiert ist.

2. Fahrzeug (1) nach Anspruch 1, wobei der Kipprahmen (16) zwischen dem Paar Rädern (3, 4) angeordnet ist und die Kippeinrichtung (17) äußere und innere Kipparme (28, 31) aufweist, die an jeder Seite des Kipprahmens (16) angeordnet sind, wobei die Arme (28, 31) an dem Fahrzeugrahmen (8) und an dem Kipprahmen (16) drehbar montiert sind und derart positioniert sind, daß während des Kippens des Kipprahmens (16) der Behälter (14), der sich über dem Paar Räder (3, 4) erstreckt, über und an diesen Rädern vorbeigeht.

3. Fahrzeug nach Anspruch 2, wobei in der ersten Stellung des Kipprahmens (16) die Drehpunkte der äußeren Kipparme (30, 31) in oder außerhalb und weg von einer senkrechten Ebene durch eine Radachse des Paares Räder (3, 4) hindurch liegen.

4. Fahrzeug (1) nach Anspruch 3, wobei beide äußere Kipparme (30, 31) ein Kippjoch (32) bilden.

5. Fahrzeug (1) nach Anspruch 3 oder 4, wobei ein Rückstellzylinder (50) einerseits mit dem Kipprahmen (16) und andererseits mit dem Fahrzeugrahmen (8) verbunden ist und über eine Verbindungsleitung (60) mit einem Akkumulator (61) verbunden ist, der mit Flüssigkeit und Gas gefüllt ist.

6. Fahrzeug (1) nach Anspruch 5, wobei eine Drossel (59) in der Verbindungsleitung (60) eine Kolbenbohrung (58) aufweist.

7. Fahrzeug nach Anspruch 5 oder 6, wobei eine Verriegelung (65) zum Verriegeln des Kipprahmens (16) an dem Fahrzeugrahmen (8) mit einem Ventil (59) verbunden ist, welches in der Verbindungsleitung (60) zwischen dem Rückstellzylinder (50) und dem Akkumulator (61) angeordnet ist.

8. Fahrzeug (1) nach den Ansprüchen 1-7, wobei die Antriebseinrichtung (5) des Drehtisches (15) über ein trennbares Getriebe (75) mit dem Antrieb des Fahrzeuges verbunden ist.

9. Fahrzeug (1) nach den Ansprüchen 1-8, wobei das Fahrzeug mit einem einzigen lenkbaren Rad (2) versehen ist, das über eine Achse (80) an dem Fahrzeugrahmen (8) montiert ist und über ein Lenkgetriebe (85) mit einer Lenkvorrichtung (86) drehbar um die Achse verbunden ist.

10. Fahrzeug (1) nach Anspruch 9, wobei das Lenkgetriebe ein Zahnrad (87) aufweist, welches mit einem Handhebel steuerbar ist und welches mit einem Zahnrad des lenkbaren Rades (89) gekuppelt ist.

11. Fahrzeug (1) nach den Ansprüchen 1-10, welches mit einem Anhänger (19) versehen ist, welcher mit einer Brücke (24) versehen ist, mit welcher ein Behälter (21), der auf dem Anhänger (19) plaziert ist, auf dem Drehtisch (15) plaziert werden kann.

12. Fahrzeug (1) nach Anspruch 11, wobei die Brücke eine Schwenkbrücke (24) ist, mit welcher ein Behälter (21), der an einer Seite plaziert ist, mit seinem Behälterboden auf den Drehtisch (15) geschwenkt werden kann.

## Revendications

1. Véhicule (1), comprenant un châssis de véhicule (8) équipé de roues avant (2) et arrière (3, 4) ; un plateau tournant (15) destiné à recevoir, de façon rotative, un récipient (14) s'étendant au-dessus de la paire de roues (3, 4) ; et un châssis basculant (16) qui supporte, de façon rotative, le plateau tournant (15) et qui est relié, par l'intermédiaire de moyens basculants (17), au châssis du véhicule (8) et qui peut basculer entre une première position, dans laquelle le récipient (14) repose, de façon rotative sur le plateau tournant (15), et une deuxième position basculée, dans laquelle le récipient est incliné vers le bas en direction du sol, caractérisé en ce que la surface de support du plateau tournant (15) est située à l'extérieur d'une enveloppe définie par la paire de roues (3, 4) lorsqu'elles se trouvent à la fois dans les première et deuxième positions, et se déplaçant entre celles-ci.

2. Véhicule (1) selon la revendication 1, dans lequel le châssis basculant (16) est situé entre la paire de roues (3, 4) et dans lequel les moyens basculants (17) comprennent des bras basculants extérieurs et intérieurs (28, 31), situés de part et d'autre du châssis basculant (16), bras (28, 31) qui sont montés rotatifs sur le châssis du véhicule (8) et sur le châssis basculant (16), et qui sont positionnés de telle sorte que, lors du basculement du châssis basculant (16), le récipient (14) s'étendant au-dessus de la paire de roues (3, 4) passe au-dessus et le long de ces roues.

3. Véhicule selon la revendication 2, dans lequel, dans la première position du châssis basculant (16), les points de rotation des bras basculants extérieurs (30, 31) se situent dans, ou hors de et à distance d'un plan perpendiculaire traversant un axe de roue de la paire de roues (3, 4).

4. Véhicule (1) selon la revendication 3, dans lequel les deux bras basculants extérieurs (30, 31) forment un joug basculant (32).

5. Véhicule (1) selon la revendication 3 ou 4, dans lequel un vérin de remise en place (50) est relié, d'un côté, au châssis basculant (16) et, de l'autre côté, au châssis du véhicule (8), et est relié, par l'intermédiaire d'une ligne de liaison (60), à un accumulateur (61) rempli de liquide et de gaz.

6. Véhicule (1) selon la revendication 5, dans lequel un étranglement (59) dans la ligne de connexion (60) comprend un perçage (58) destiné au piston.

7. Véhicule selon la revendication 5 ou 6, dans lequel un verrou (65), destiné à verrouiller le châssis basculant (16) sur le châssis du véhicule (8), est relié à une soupape (59) qui est montée dans la ligne de liaison (60) entre le vérin de remise en place (50) et l'accumulateur (61).

8. Véhicule (1) selon les revendications 1-7, dans lequel les moyens d'entraînement (5) du plateau tournant (16) sont reliés, par l'intermédiaire d'un mécanisme d'entraînement divisible (75), aux moyens d'entraînement du véhicule.

9. Véhicule (1) selon les revendications 1-8, dans lequel le véhicule est équipé d'un seul volant manoeuvrable (2), monté sur le châssis de véhicule (8) par l'intermédiaire d'un axe (80) et relié, par l'intermédiaire d'un mécanisme d'entraînement de manoeuvre (85), à un dispositif de manoeuvre (86) susceptible de tourner autour de l'axe.

10. Véhicule (1) selon la revendication 9, dans lequel le mécanisme d'entraînement de manoeuvre comprend une roue dentée (87) commandable à l'aide d'une poignée, qui est couplé à une roue dentée du volant manoeuvrable (89).

11. Véhicule (1) selon les revendications 1-10, équipé d'une remorque (19) qui est pourvue d'un pont (24) au moyen duquel un récipient (21) placé sur la remorque (19) peut être placé sur le plateau tournant (15).

12. Véhicule (1) selon la revendication 11, dans lequel le pont est un pont pivotant (24) au moyen duquel un récipient (21) placé sur un côté puisse être amené à pivoter, le fond de ce récipient reposant sur le plateau tournant (15).
